# EUROPEAN PATENT APPLICATION

(11) **EP 3 901 039 A1**
(43) Date of publication of application: **27.10.2021**
(21) Application number: 21170516.5
(22) Date of filing: 26.04.2021
(51) Int. Cl.: B64D 11/06, B60N 2/30

(54) **STOWABLE SEAT ASSEMBLY WITH SCISSOR ASSEMBLY**

(30) Priority: 24.04.2020 IN 202041017671; 14.12.2020 US 202017121328
(71) Applicant: B/E Aerospace, Inc., Winston-Salem, NC 27105 (US)
(72) Inventor: RAO, Sreekanth Koti Ananda, 560061 Bangalore (IN); KUMARI, Surbhi, 560067 Bengalore, KA (IN); BALAGURGI, Pradeep B., 560092 Bengaluru, KA (IN)
(74) Representative: Dehns

(57) **Abstract**

A stowable seat assembly may comprise: a scissor assembly (110) configured to operably couple to a cabin floor (20) of an aircraft (10), the scissor assembly comprising a first set of links (130) including a first bottom link (131), a second bottom link (132), a first top link (133), and a second top link (134), the first bottom link pivotably coupled to the second bottom link at a bottom link intersection, the first top link pivotably coupled to the second top link at a top link intersection; and a seat (20) pivotably coupled to the second top link and slidingly coupled to the first top link, the seat configured to extract from a stowed position to a seat position in response to pulling the seat in a vertical direction.

## Description

### CROSS-REFERENCE TO RELATED APPLICATIONS

This application is a non-provisional of, and claims priority to, and the benefit of India Provisional Application No. 202041017671 with DAS code E66B, entitled "STOWABLE SEAT ASSEMBLY with scissor assembly," filed on April 24, 2020.

### FIELD

The present disclosure relates to stowable seat assemblies, and, more specifically, to stowable seat assemblies for use in aircrafts.

### BACKGROUND

Cabin seat assemblies for attendants are generally installed in an aisle of an aircraft. The typical cabin seat assembly may protrude into the aisle way and hinder a passenger walking through the aisle way. Typical cabin seat assemblies include several components.

### SUMMARY

A stowable seat assembly is disclosed herein. The stowable seat assembly may comprise: a scissor assembly configured to operably couple to a cabin floor of an aircraft, the scissor assembly comprising a first set of links including a first bottom link, a second bottom link, a first top link, and a second top link, the first bottom link pivotably coupled to the second bottom link at a bottom link intersection, the first top link pivotably coupled to the second top link at a top link intersection; and a seat pivotably coupled to the second top link and slidingly coupled to the first top link, the seat configured to extract from a stowed position to a seat position in response to pulling the seat in a vertical direction.

In various embodiments, the first bottom link is pivotably coupled to the first top link at a first joint. The stowable seat assembly may further comprise a first mount extending from a first end to a second end, the first mount comprising a first slot disposed proximate the first end, wherein the first bottom link is slidingly coupled to the first slot. The stowable seat assembly may further comprise a second mount extending from a first mount end to a second mount end, wherein the second mount comprises a second slot disposed proximate the first mount end, and wherein the first slot is disposed vertically opposite the second slot when the seat is in the seat position. The stowable seat assembly may further comprise a bellow disposed around the scissor assembly, the bellow coupled to the seat. The scissor assembly may further comprise a second set of links disposed opposite the first set of links. The second set of links may be in accordance with the first set of links.

A stowable seat assembly is disclosed herein. The stowable seat assembly may comprise: a seat; a scissor assembly coupled to the seat, the scissor assembly configured to translate the seat in a vertical direction; an actuator coupled to a first end of the scissor assembly; and a controller electrically coupled to the actuator, the controller operable to: command the actuator to translate in a first direction to translate the seat in the vertical direction via the scissor assembly; and command the actuator to translate in a second direction to stow the seat, the second direction being opposite the first direction.

In various embodiments, the seat is configured to be flush with a cabin floor of an aircraft when the seat is in a stowed position. The first direction may be perpendicular to a cabin wall. The vertical direction may be orthogonal to a cabin floor of an aircraft. The stowable seat assembly may further comprise a mount coupled to the seat, the mount extending from a first mount end to a second mount end, the mount slidingly coupled to the scissor assembly proximate the first mount end. The mount may be pivotably coupled to the scissor assembly proximate a second end of the mount, the second end opposite the first end. The stowable seat assembly may further comprise a bellow disposed around the scissor assembly, the bellow coupled to the seat.

An aircraft is disclosed herein. The aircraft may comprise: a cabin floor having a recess disposed therein; a stowable seat assembly, the stowable seat assembly comprising: a scissor assembly pivotably coupled to the cabin floor; a seat coupled to the scissor assembly, the seat configured to translate away from the cabin floor from a stowed position to a seat position.

In various embodiments, the seat is configured to be substantially flush with the cabin floor when the stowable seat assembly is in the stowed position. The aircraft may further comprise a door coupled to the cabin floor, wherein the door is configured to cover the stowable seat assembly in the recess when the stowable seat assembly is in the stowed position. The scissor assembly may comprise a first set of links including a first bottom link, a second bottom link, a first top link, and a second top link, the first bottom link pivotably coupled to the second bottom link at a bottom link intersection, the first top link pivotably coupled to the second top link at a top link intersection. The seat may be pivotably coupled to the second top link and slidingly coupled to the first top link, the seat configured to extract from the stowed position to the seat position in response to pulling the seat in a vertical direction. The first bottom link may be pivotably coupled to the first top link at a first joint.

The foregoing features and elements may be combined in various combinations without exclusivity, unless expressly indicated otherwise. These features and elements as well as the operation thereof will become more apparent in light of the following description and the accompanying drawings. It should be understood, however, the following description and drawings are intended to be exemplary in nature and non-limiting.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the detailed description and claims when considered in connection with the figures, wherein like numerals denote like elements.
FIG. 1 illustrates an aircraft, in accordance with various embodiments;
FIG. 2 illustrates a stowable seat assembly, in accordance with various embodiments;
FIG. 3 illustrates a stowable seat assembly in a stowed state, in accordance with various embodiments;
FIG. 4 illustrates a stowable seat assembly in a stowed state, in accordance with various embodiments;
FIG. 5 illustrates a stowable seat assembly, in accordance with various embodiments;
FIG. 6 illustrates a side view of a stowable seat assembly, in accordance with various embodiments;
FIG. 7 illustrates a control system for a stowable seat assembly, in accordance with various embodiments; and
FIG. 8 illustrates a stowable seat assembly, in accordance with various embodiments.

### DETAILED DESCRIPTION

All ranges and ratio limits disclosed herein may be combined. It is to be understood that unless specifically stated otherwise, references to "a," "an," and/or "the" may include one or more than one and that reference to an item in the singular may also include the item in the plural.

The detailed description of exemplary embodiments herein makes reference to the accompanying drawings, which show exemplary embodiments by way of illustration. While these exemplary embodiments are described in sufficient detail to enable those skilled in the art to practice the exemplary embodiments of the disclosure, it should be understood that other embodiments may be realized and that logical changes and adaptations in design and construction may be made in accordance with this disclosure and the teachings herein. Thus, the detailed description herein is presented for purposes of illustration only and not limitation.

The scope of the invention is defined by the appended claims rather than by merely the examples described. For example, the steps recited in any of the method or process descriptions may be executed in any order and are not necessarily limited to the order presented. Furthermore, any reference to singular includes plural embodiments, and any reference to more than one component or step may include a singular embodiment or step. Also, any reference to attached, fixed, coupled, connected or the like may include permanent, removable, temporary, partial, full and/or any other possible attachment option. Additionally, any reference to without contact (or similar phrases) may also include reduced contact or minimal contact. Surface shading lines may be used throughout the figures to denote different parts but not necessarily to denote the same or different materials.

Typical seat assemblies for a cabin attendant in aircrafts are installed in an aisle way of a cabin. In this regard, typical seat assemblies may pose a hindrance to passengers entering and exiting the aircraft. The typical seat assemblies may disrupt an aesthetic flow of the cabin of the aircraft. A stowable seat assembly is disclosed herein. The stowable seat assembly may be configured to stow within an aircraft floor. In this regard, the stowable seat assembly may be camouflaged from passengers during entering and exiting of the aircraft. The stowable seat assembly may comprise a scissor assembly operably coupled to the aircraft floor and the seat. In various embodiments, the scissor assembly may be configured to collapse for stowage and/or configured to expand for use. In various embodiments, the seat may be configured to be substantially flush with the aircraft floor in a stowed position. In various embodiments, the stowable seat assembly may allow for an unobstructed ingress and egress of passengers. In various embodiments, the stowable seat assembly may reduce weight and cost relative to typical seat assemblies. In various embodiments, the stowable seat assembly may be configured to adjust a height of the stowable seat assembly while in use. In this regard, the stowable seat assembly may accommodate various occupant sizes.

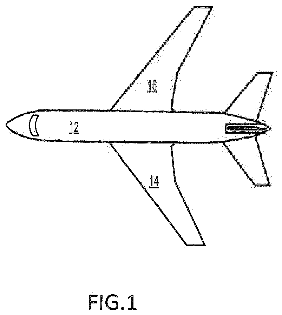

With reference to FIG. 1, an aircraft 10 in accordance with various embodiments may comprise a fuselage 12, and wings 14, 16. Wings 14, 16 may extend from fuselage 12. Disposed within fuselage 12 is a cabin. The cabin includes a plurality of seats including pilot seats, passenger seats, and attendant seats. Attendant seats may only be in use during takeoff, landing, taxi, and when the aircraft 10 is experiencing turbulence in flight. In this regards, in various embodiments, a stowable seat assembly for use by an attendant may as desired may allow additional space for passengers to move about the cabin of the aircraft 10 while the stowable seat assembly is not in use.

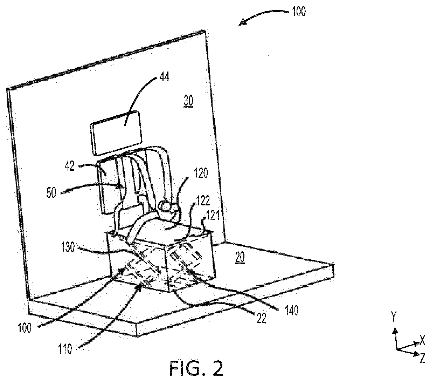

Referring now to FIG. 2, a stowable seat assembly 100 for use in an aircraft 10 from FIG. 1, is illustrated, in accordance with various embodiments. The stowable seat assembly 100 may be configured to operably couple to a cabin floor 20. The cabin floor 20 may be disposed in a fuselage 12 of an aircraft 10 from FIG. 1. The cabin floor 20 may comprise a recess 22 disposed therein. The recess 22 may be configured to receive the stowable seat assembly 100. In various embodiments, the cabin floor 20 may be disposed adjacent to a cabin wall 30.

In various embodiments, the stowable seat assembly includes a scissor assembly 110 and a seat 120. The scissor assembly 110 may be configured to couple to operably couple to the cabin floor 20 at a first end of the scissor assembly 110. The scissor assembly 110 may operably couple to the seat 120 at a second end of the scissor assembly. The second end may be opposite the first end. The seat 120 may be configured to translate in a vertical direction. A "vertical direction," as described herein is a direction orthogonal to the cabin floor 20 (e.g., the Y-direction).

In various embodiments, the seat 120 comprises a handle 122. The handle 122 may be disposed at a front end 121 of the seat 120. In various embodiments, the handle 122 may be disposed on the sides of seat 120, or any other location where an attendant could utilize the handle 122 to extract the seat 120 from recess 22.

In various embodiments, the scissor assembly comprises a first set of links 130 and a second set of links 140. The first set of links 130 may be disposed on a first side of the stowable seat assembly 100 and the second set of links 130 may be disposed on a second side of the stowable seat assembly 100.

In various embodiments, a Z-direction may be defined as being orthogonal to the cabin wall 30 and an X-direction may be defined by a direction orthogonal to the Y-direction and the Z-direction as defined herein. In various embodiments, the first set of links 130 may be configured to pivotably couple to the cabin floor 20 at a location distal in the Z-direction to the cabin wall 30. Similarly, the second set of links 140 may be configured to pivotably couple to the cabin floor 20 at a location distal in the Z-direction to the cabin wall 30. In various embodiments, the first set of links 130 may be configured to slidingly couple to the cabin floor 20 at a location proximal in the Z-direction to the cabin wall 30. Similarly, the second set of links 140 may be configured to slidingly couple to a location proximal in the Z-direction to the cabin wall 30.

In various embodiments, the first set of links 130 may pivotably couple to the seat 120 at a location distal to the cabin wall 30 and the first set of links 130 may slidingly couple to the seat 120 at a location proximal to the cabin wall 30. Similarly, the second set of links 140 may pivotably couple to the seat 120 at a location distal to the cabin wall 30 and the second set of links 140 may slidingly couple to the seat 120 at a location proximal to the cabin wall 30.

In various embodiments, a back seat pad 42 and a headrest pad 44 may be coupled to cabin wall 30. In this regard, while the stowable seat assembly 100 is in use, an attendant may have a back rest (e.g., back seat pad 42) and/or a head rest (e.g., headrest pad 44). In various embodiments, a restraint assembly 50 may be coupled to the wall 30. In various embodiments, the restraint assembly 50 may be coupled to the stowable seat assembly 100 and be configured to store with the stowable seat assembly 100.

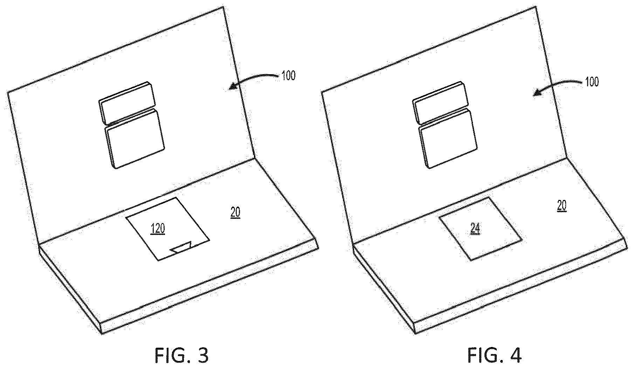

Referring now to FIG. 3, a stowable seat assembly 100 in a stowed position is illustrated, in accordance with various embodiments. In a stowed position, the seat 120 of the stowable seat assembly 100 may be flush with the cabin floor 20. In various embodiments, with brief reference to FIG. 4, a stowable seat assembly 100 may be stowed below a sliding door 24 disposed in the cabin floor 20 and configured to cover the stowable seat assembly 100.

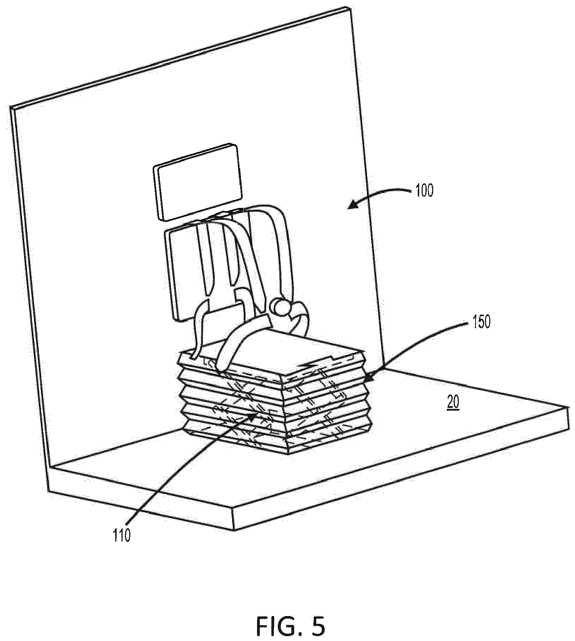

Referring now to FIG. 5, The stowable seat assembly 100 may further comprise a bellow 150 configured to enclose the scissor assembly 110. The bellow 150 may be coupled to seat 120 at a first end and the bellow 150 may be configured to couple to the cabin floor 20 at a second end. The bellow 150 may be configured to stretch as the stowable seat assembly 100 transitions from a stowed position to a seat position and/or configured to compress as the stowable seat assembly 100 transitions from a seat position to a stowed position. The bellow 150 may cover the scissor assembly 110. In various embodiments, the bellow 150 may prevent foreign objects from entering scissor assembly 110. In this regard, in various embodiments, the bellow 150 may protect the scissor assembly 110.

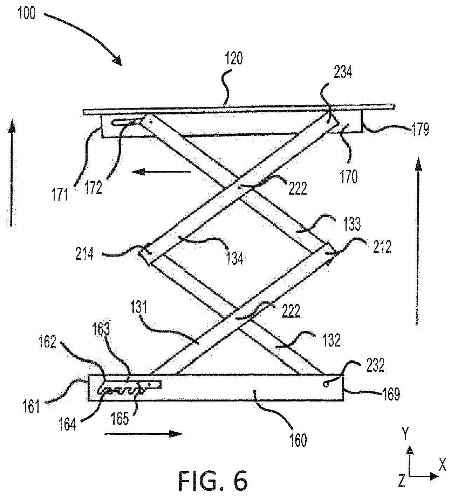

Referring now to FIG. 6, a side view of a stowable seat assembly 100, in accordance with various embodiments, is illustrated. The stowable seat assembly 100 further comprises a first mount 160 and a second mount 170. In various embodiments, the first mount 160 may be configured to be disposed in the recess 22 of the cabin floor 20 from FIG. 2. In various embodiments, the first mount 160 may be integral to the cabin floor 20 from FIG. 2. In various embodiments, the second mount 170 may be fixedly coupled to the seat 120. The second mount 170 may be coupled to the seat 120 by fasteners, by an adhesive, or any other fastening method.

In various embodiments, the first mount 160 extends from a first end 161 to a second end 169. The first mount 160 may comprise a first slot 162 disposed at the first end 161 of the first mount 160. In various embodiments, the first end 161 of the first mount 160 may be disposed proximate the cabin wall 30 from FIG. 2. In various embodiments, the second mount 170 extends from a first end 171 to a second end 179. The second mount 170 may comprise a second slot 172 disposed vertically opposite the first slot 162 when the stowable seat assembly 100 is in a seat position. The second slot 172 may be a linear slot extending in an orthogonal direction to cabin wall 30 from FIG. 2 (e.g., the X-direction). Similarly, in various embodiments, the first end 161 may include a linear portion 163 extending in the orthogonal direction to cabin wall 30 from FIG. 2 (e.g., the X-direction), and a locking portion 164 including a plurality of teeth 165 extending at an angle toward the first end 161 and in the away from the second mount 170 in the vertical direction (e.g., the negative Y-direction).

Although described as being proximate the cabin wall 30, any orientation of the scissor assembly 110 where pulling the stowable seat assembly 100 in a vertical direction transitions the stowable seat assembly 100 from a stored position to a seat position is within the scope of this disclosure.

In various embodiments, the first set of links 130 from FIG. 2 comprise a first bottom link 131, a second bottom link 132, a first top link 133, and a second top link 134. The first bottom link 131 may be configured to slidingly couple to the first mount 160 at a first end 161 via first slot 162 of the first mount 160 by any method known in the art. Similarly, the first top link 133 may slidingly couple to the second mount 170 at the first end 171 via second slot 172 of the second mount. In various embodiments, the first top link 133 and the first bottom link 131 may be pivotably coupled together at first joint 212.

In various embodiments, the second bottom link 132 may be configured to be pivotably coupled to the first mount 160 proximate second end 169 of the first mount 160. Similarly, the second top link 134 may be pivotably coupled to the second mount 170 proximate second end 179 of the second mount 170. The second end 179 of the second mount 170 may be disposed vertically opposite the second end 169 of the first mount 160 when the stowable seat assembly 100 is in a seat position. In various embodiments, the second bottom link 132 and the second top link 134 may be pivotably coupled together at a second joint 214.

In various embodiments, the first bottom link 131 is pivotably coupled to the second bottom link 132 at a bottom middle joint 222, and the first top link 133 is pivotably coupled to the second top link 134 at a top middle joint 224. The bottom middle joint 222 is disposed at an intersection of the first bottom link 131 and the second bottom link 132. The bottom middle joint 222 may be disposed between the first slot 162 and the first joint 212. Similarly, the bottom middle joint 222 may be disposed between the second end 169 of the first mount 160 and the second joint 214. The top middle joint 224 is disposed at an intersection of the first top link 133 and the second top link 134. The top middle joint 224 may be disposed between the second slot 172 and the first joint 212. Similarly, the top middle joint 224 may be disposed between the second end 179 of the second mount 170 and the second joint 214.

In various embodiments, the stowable seat assembly 100 is configured to translate in the vertical direction (e.g., the Y-direction) in response to puling the seat linearly in the vertical direction (e.g., the Y-direction). In this regard, in response to pulling the seat 120 in the vertical direction a proximal end of the first bottom link 131 and the first top link 133 translate in the X-direction within a respective slot (e.g., slot 162 and slot 172). In response to first bottom link 131 and the first top link 133 translating toward second end 169 of first mount 160 and second end 179 of second mount 170, second bottom link 132 may pivot about a bottom joint 232 proximate second end 169 of the first mount 160. Similarly, the second top link 134 may pivot about a top joint 234 proximate second end 179 of the second mount 170. In this regard, a distance between first joint 212 and second joint 214 may shorten in the X-direction, and a height of the stowable seat assembly 100 may increase.

In various embodiments, once the seat 120 is pulled to a desired height, the stowable seat assembly 100 may be lowered gently until the first bottom link 131 engages a tooth in the plurality of teeth 165 to lock the stowable seat assembly 100 in an upright position. In various embodiments, the second set of links 140 from FIG. 2 may be in accordance with the first set of links 130 as described herein. In various embodiments, only a single set of links, such as first set of links 130 may be utilized and/or centered in the stowable seat assembly 100.

In various embodiments, the stowable seat assembly 100, as disclosed herein, may be configured to camouflage the stowable seat assembly 100 by disposing the stowable seat assembly 100 at, or below, a cabin floor 20 from FIG. 2 when not in use. In various embodiments, the stowable seat assembly 100 may allow an attendant to adjust the height by having multiple locking positions in second slot 162.

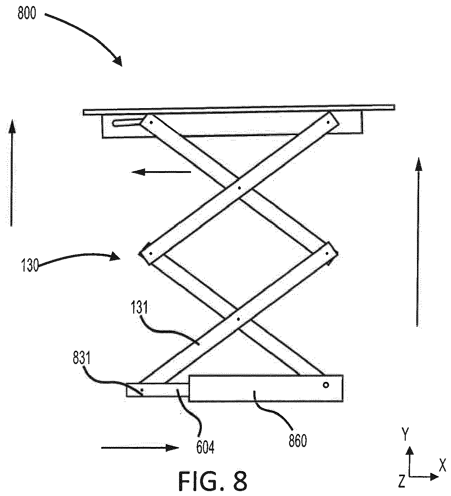

In various embodiments, with reference now to FIG. 8, a stowable seat assembly 800, in accordance with various embodiments, is illustrated. The stowable seat assembly 800 may be in accordance with stowable seat assembly 100, with the exception that stowable seat assembly 800 is configured for automatic extraction and retraction. For example, stowable seat assembly 800 may comprise an actuator 604 coupled to first bottom link 131 of scissor assembly 130. The actuator may be configured to translate a bottom end 831 of the first bottom link in a linear direction (e.g., X-direction).

In various embodiments, the actuator 604 may be disposed in a first mount 860. First mount 860 may be in accordance with first mount 160 from FIG. 6 with the exception that first mount 160 is configured to house the actuator 604.

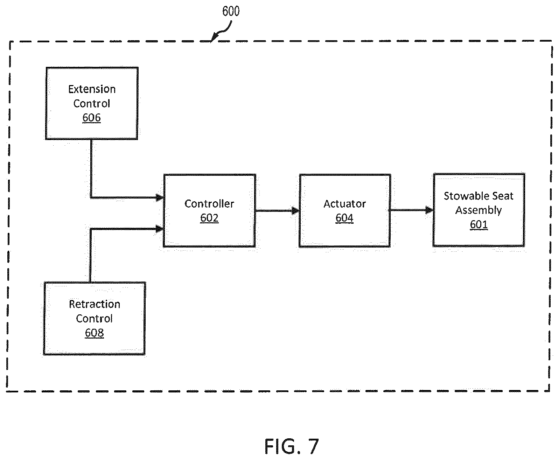

In various embodiments and with additional reference to FIG. 7, a schematic block diagram of a control system 600 for a stowable seat assembly 601 is illustrated. In various embodiments, stowable seat assembly 601 may be in accordance with stowable seat assembly 100 with the exception that an actuator 604 is configured to translate the first bottom link 131 in the X-direction. Control system 600 includes the controller 602 in electronic communication with the actuator 604. In various embodiments, controller 602 may be integrated into computer systems onboard aircraft 10. In various embodiments, controller 602 may be configured as a central network element or hub to access various systems, engines, and components of control system 600. Controller 602 may comprise a network, computer-based system, and/or software components configured to provide an access point to various systems, engines, and components of control system 600. In various embodiments, controller 602 may comprise a processor. In various embodiments, controller 602 may be implemented in a single processor. In various embodiments, controller 602 may be implemented as and may include one or more processors and/or one or more tangible, non-transitory memories and be capable of implementing logic. Each processor can be a general purpose processor, a digital signal processor (DSP), an application specific integrated circuit (ASIC), a field programable gate array (FPGA) or other programable logic device, discrete gate or transistor logic, discrete hardware components, or any combination thereof. Controller 602 may comprise a processor configured to implement various logical operations in response to execution of instructions, for example, instructions stored on a non-transitory, tangible, computer-readable medium configured to communicate with controller 602.

System program instructions and/or controller instructions may be loaded onto a non-transitory, tangible computer-readable medium having instructions stored thereon that, in response to execution by a controller, cause the controller to perform various operations. The term "non-transitory" is to be understood to remove only propagating transitory signals per se from the claim scope and does not relinquish rights to all standard computer-readable media that are not only propagating transitory signals per se.

In various embodiments, the controller 602 is in electrical communication with an extension control 606 and a retraction control 608. In various embodiments, extension control 606 and retraction control 608 may be disposed on cabin wall 30 from FIG. 2. In this regard, when an attendant wants to transition the stowable seat from a stowed position to a seat position, the attendant may utilize the extension control 606 to translate the actuator in the positive X-direction. The extension control 606 may instruct actuator 604 to translate the first bottom link 131 until extension control 606 is released or a maximum height is reached. In this regard, the actuator 604 may translate the first bottom link 131 from FIG. 5 in the positive X-direction and increase a height of the seat 120 relative to the cabin floor 20 from FIG. 2 until a desired height is reached. After use, the attendant may utilize retraction control 608 to retract the stowable seat assembly 601. In various embodiments, the stowable seat assembly 601 may transition from a seat position to a stowed position in response to controller 602 receiving a stow command from retraction control 608. In various embodiments, control system 600 may allow for an automatic stowable seat assembly to increase convenience for attendants.

Benefits and other advantages have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, and any elements that may cause any benefit or advantage to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C.

Systems, methods and apparatus are provided herein. In the detailed description herein, references to "various embodiments," "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

## Claims

1. A stowable seat assembly, comprising:
a scissor assembly (110) configured to operably couple to a cabin floor (20) of an aircraft (10), the scissor assembly comprising a first set of links (130) including a first bottom link (131), a second bottom link (132), a first top link (133), and a second top link (134), the first bottom link pivotably coupled to the second bottom link at a bottom link intersection, the first top link pivotably coupled to the second top link at a top link intersection; and
a seat (120) pivotably coupled to the second top link and slidingly coupled to the first top link, the seat configured to extract from a stowed position to a seat position in response to pulling the seat in a vertical direction.

2. The stowable seat assembly of claim 1, wherein the first bottom link is pivotably coupled to the first top link at a first joint (212).

3. The stowable seat assembly of claim 1 or 2, further comprising a first mount (160) extending from a first end (161) to a second end (169), the first mount comprising a first slot (162) disposed proximate the first end, wherein the first bottom link is slidingly coupled to the first slot.

4. The stowable seat assembly of claim 3, further comprising a second mount (170) extending from a first mount end (171) to a second mount end (179), wherein the second mount comprises a second slot (172) disposed proximate the first mount end, and wherein the first slot (162) is disposed vertically opposite the second slot (172) when the seat is in the seat position.

5. The stowable seat assembly of any preceding claim, further comprising a bellow (150) disposed around the scissor assembly, the bellow coupled to the seat.

6. The stowable seat assembly of any preceding claim, wherein the scissor assembly further comprises a second set of links (140) disposed opposite the first set of links, and optionally wherein the second set of links are in accordance with the first set of links.

7. A stowable seat assembly, comprising:
a seat (120);
a scissor assembly (110) coupled to the seat, the scissor assembly configured to translate the seat in a vertical direction;
an actuator (604) coupled to a first end of the scissor assembly; and
a controller (602) electrically coupled to the actuator, the controller operable:
command the actuator to translate in a first direction to translate the seat in the vertical direction via the scissor assembly; and
command the actuator to translate in a second direction to stow the seat, the second direction being opposite the first direction.

8. The stowable seat assembly of claim 7, wherein the seat is configured to be flush with a cabin floor (20) of an aircraft when the seat is in a stowed position.

9. The stowable seat assembly of claim 7 or 8, wherein the first direction is perpendicular to a cabin wall (30); and/or wherein the vertical direction is orthogonal to a cabin floor of an aircraft.

10. The stowable seat assembly of claim 7, 8 or 9, further comprising a mount (160) coupled to the seat, the mount extending from a first mount end (161) to a second mount end (169), the mount slidingly coupled to the scissor assembly proximate the first mount end, and optionally wherein the mount is pivotably coupled to the scissor assembly proximate a second end of the mount, the second end opposite the first end.

11. An aircraft, comprising:
a cabin floor (20) having a recess (22) disposed therein;
a stowable seat assembly (100), the stowable seat assembly comprising:
a scissor assembly (110) pivotably coupled to the cabin floor;
a seat (120) coupled to the scissor assembly, the seat configured to translate away from the cabin floor from a stowed position to a seat position.

12. The aircraft of claim 11, wherein the seat is configured to be substantially flush with the cabin floor when the stowable seat assembly is in the stowed position.

13. The aircraft of claim 11 or 12, further comprising a door (24) coupled to the cabin floor, wherein the door is configured to cover the stowable seat assembly in the recess when the stowable seat assembly is in the stowed position.

14. The aircraft of claim 11, 12 or 13, wherein the scissor assembly comprises a first set of links (130) including a first bottom link (131), a second bottom link (132), a first top link (133), and a second top link (134), the first bottom link pivotably coupled to the second bottom link at a bottom link intersection, the first top link pivotably coupled to the second top link at a top link intersection.

15. The aircraft of claim 14, wherein the seat is pivotably coupled to the second top link and slidingly coupled to the first top link, the seat configured to extract from the stowed position to the seat position in response to pulling the seat in a vertical direction, and optionally wherein the first bottom link is pivotably coupled to the first top link at a first joint.
